# FASCICULE DE BREVET EUROPEEN

(11) **EP 1 587 718 B1**
(45) Date de publication et mention de la délivrance du brevet: **15.08.2007**
(21) Numéro de dépôt: 04704258.5
(22) Date de dépôt: 22.01.2004
(51) Int. Cl.: B60R 21/045

(54) **Pièce d'équipement comprenant une armature rigide de support et un garnissage souple et véhicule comprenant une telle pièce d'équipement**
Ausrüstungsteil mit einem starren Stützrahmen und einer flexiblen Auskleidung sowie solch ein Ausrüstungsteil umfassendes Fahrzeug
Piece of equipment comprising a rigid support frame and a flexible lining and vehicle comprising one such piece of equipment

(30) Priorité: 22.01.2003 FR 0300685
(43) Date de publication de la demande: 26.10.2005
(73) Titulaire: Faurecia Interieur Industrie, 92000 Nanterre (FR)
(72) Inventeur: PEGORIER, Nicolas, 93400 Saint Ouen (FR); STOOF, Freddy, F-92000 NANTERRE (FR)
(74) Mandataire: Domenego, Bertrand
(86) Numéro de dépôt international: PCT/FR2004/000146
(87) Numéro de publication internationale: WO 2004/067331

(56) Documents cités:
- DE-A- 19 602 060
- DE-A- 19 812 828
- DE-A- 19 955 221
- DE-C- 4 446 484
- US-A- 3 871 636
- MANN D: "PLASTICS DEVELOPMENTS IN VEHICLE DASHBOARDS" AUTOMOTIVE ENGINEER, MECHANICAL ENGINEERING PUBL.LTD. BURY ST.EDMUNDS, GB, vol. 21, no. 2, 1 avril 1996 (1996-04-01), pages 23-24, XP000585069 ISSN: 0307-6490

## Description

La présente invention concerne une pièce d'équipement pour véhicule automobile, du type comprenant une armature rigide de support et un garnissage souple recouvrant la face extérieure de l'armature de support, le garnissage comprenant une peau extérieure d'habillage.

L'invention s'applique en particulier aux planches de bord.

US-3 871 636 décrit une planche de bord de véhicule automobile comprenant une armature rigide et un garnissage d'absorption de chocs.

Le document FR- 2 729 913 décrit une planche de bord conformément au préambule de la revendication 1.

Le garnissage souple y comprend une couche de mousse interposée entre la peau extérieure d'habillage et l'armature rigide de support. Cette couche de mousse confère sa souplesse et son épaisseur au garnissage, ce qui contribue au confort à l'intérieur du véhicule automobile.

Cependant, le coût global de fabrication de la planche de bord est relativement élevé, notamment car la réalisation de la couche de mousse peut s'avérer complexe.

Un but de l'invention est de résoudre ce problème en fournissant une pièce d'équipement du type précité qui assure un confort satisfaisant tout en étant de coût de réalisation plus réduit.

A cet effet, l'invention a pour objet une pièce d'équipement selon la revendication 1.

Selon des modes particuliers de réalisation, la pièce d'équipement peut comprendre l'une ou plusieurs des caractéristiques des revendications 2 à 10, prise(s) isolément ou selon toutes les combinaisons techniquement possibles.

L'invention a en outre pour objet un véhicule automobile comprenant une pièce d'équipement, caractérisée en ce que la pièce d'équipement est une pièce telle que définie ci-dessus.

L'invention sera mieux comprise à la lecture de la description qui va suivre, donnée uniquement à titre d'exemple, et faite en se référant aux dessins annexés, sur lesquels :
- la figure 1 est une vue schématique, partielle et en perspective de l'habitacle d'un véhicule automobile selon l'invention,
- la figure 2 est vue partielle, schématique, en perspective et agrandie, illustrant un tronçon de la planche de bord du véhicule de la figure 1,
- la figure 3 est une vue schématique, agrandie et en coupe prise suivant le plan III-III de la figure 2,
- la figure 4 est une vue schématique agrandie de la partie cerclée IV de la figure 3 illustrant une déformation du garnissage de la planche de bord, et
- la figure 5 est une vue analogue à la figure 4 illustrant une variante de la planche de bord, en l'absence de déformation.

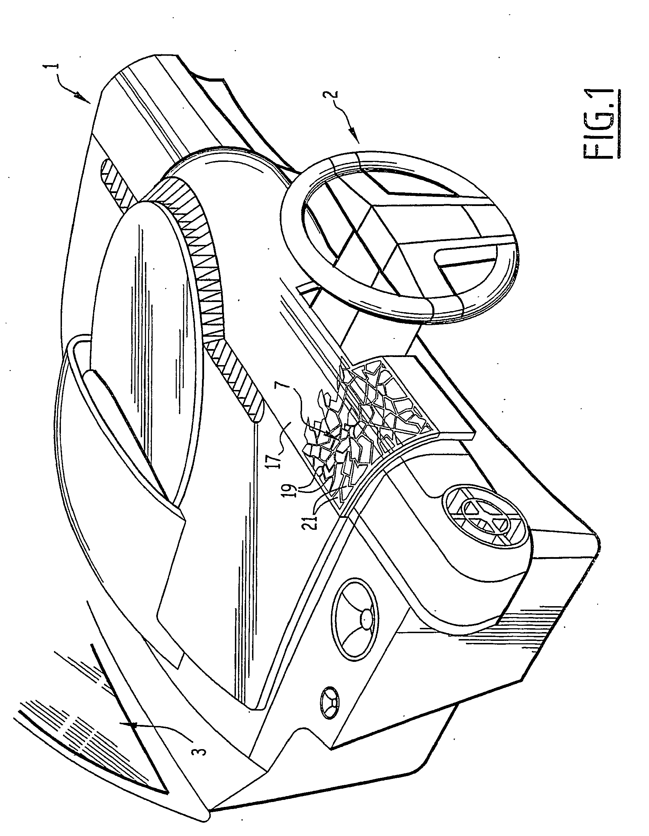

La figure 1 illustre l'habitacle d'un véhicule automobile. On y distingue notamment une planche de bord 1, un volant de direction 2 et un pare-brise 3.

Dans tout ce qui suit, les termes " avant ", " arrière ", " droite ", " gauche ", " inférieur " et " supérieur " s'entendent par rapport à la position d'un conducteur et au sens de marche du véhicule automobile. Les termes " intérieur " et " extérieur " s'entendent quant à eux par rapport à la planche de bord 1.

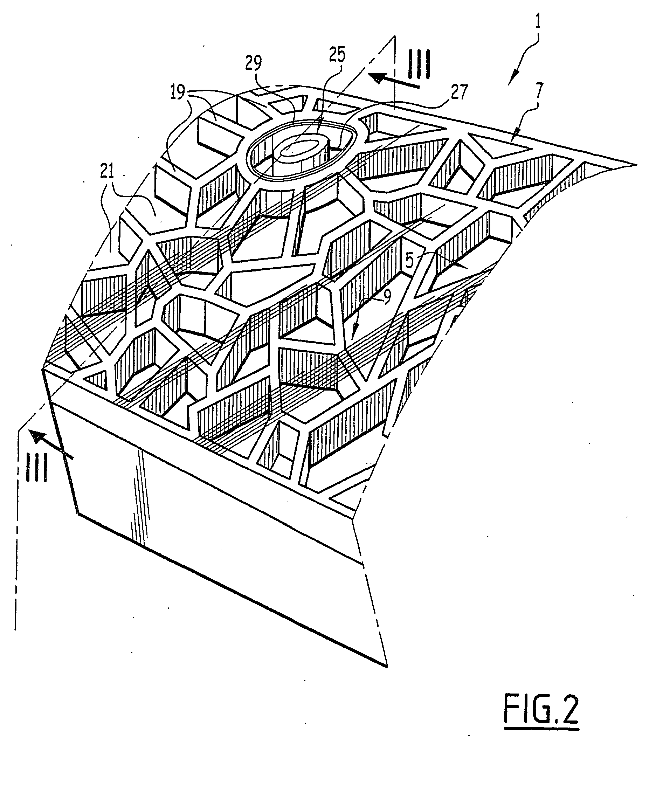

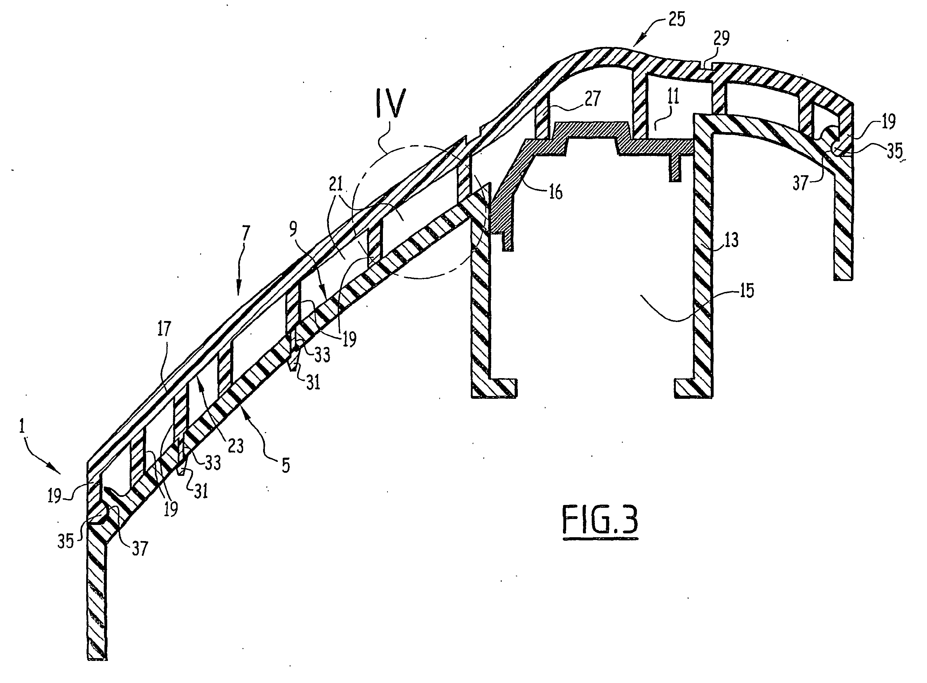

Comme illustré plus particulièrement par les figures 2 et 3, la planche de bord 1 comprend une armature rigide de support 5 et un garnissage souple 7 recouvrant la face extérieure 9 de l'armature de support 5.

L'armature de support 5, parfois dénommée insert, est fixée de manière classique à la caisse du véhicule automobile. Elle est réalisée par exemple en matière thermoplastique polyoléfinique, homopolymère ou copolymère, comprenant éventuellement des charges minérales ou un renforcement par des fibres de verre, ou par exemple en ABS-PC (Acrylonitrile-Butadiène-Styrène et Polycarbonate) éventuellement renforcée par des fibres de verre. Ces matériaux ont une rigidité permettant de remplir une fonction de support.

L'armature de support 5 est galbée pour conférer à la planche de bord 1 sa forme.

Un orifice sensiblement circulaire 11 (figure 3) est ménagé dans l'armature 5. L'armature 5 est prolongée vers l'intérieur, au droit de l'orifice 11, par un manchon 13 qui délimite avec l'orifice 11 un passage 15.

Un bouton poussoir 16 est reçu dans le passage 15 pour pouvoir coulisser entre une première position représentée sur la figure 3 où il affleure sensiblement la face extérieure 9 de l'armature 5 et une seconde position enfoncée (non- représentée) d'actionnement d'un ou de plusieurs accessoire(s) du véhicule automobile, par exemple des feux de détresse.

Le garnissage souple 7 comprend une peau extérieure d'habillage 17 prolongée vers l'intérieur de la planche 1 par un réseau de nervures 19 délimitant entre elles des alvéoles 21.

Le garnissage 7, et donc la peau 17 et les nervures 19, sont formés d'une seule pièce en matière plastique, par exemple en thermoplastique élastomère tels que du thermoplastique polyuréthanne (TPU), du thermoplastique polyoléfine (TPO). On peut également utiliser du polychlorure de vinyle souple (PVC) ou du caoutchouc tel que du silicone. Le garnissage 7 est donc notablement plus souple que l'armature 5.

La matière utilisée pour former le garnissage 7 des figures 1 à 3 est translucide comme cela a été représenté sur la figure 2 et sur la région gauche de la planche de bord 1 sur la figure 1.

Ainsi, un observateur peut distinguer les nervures 19 depuis l'extérieur de la planche de bord 1 au travers de la peau 17. Pour faciliter la représentation, le garnissage 7 a en revanche été représenté opaque sur la figure 3.

Les nervures 19 s'étendent depuis la face intérieure 23 de la peau 17 jusqu'à la face extérieure 9 de l'armature 5 sur laquelle elles s'appuient. On notera que la plupart des nervures 19 ne sont pas orthogonales aux surfaces directrices de l'armature 5 et de la peau 17.

La région 25 de la peau 17 disposée en regard du bouton 16 est prolongée vers l'intérieur par une nervure 27 sensiblement annulaire.

La nervure 27 prend appui sur la face extérieure du bouton 16.

Une rainure extérieure 29 sensiblement annulaire délimite la région 25 par rapport au reste de la peau 17 et la nervure 27 est isolée du reste du réseau de nervures 19. Ainsi, la région 25 peut se déformer sous l'action d'un doigt d'un occupant du véhicule automobile pour permettre de déplacer le bouton 16 de sa première position vers sa seconde position.

Certaines des nervures 19 éloignées des bords de la peau 17 sont munies de crochets d'encliquetage 31 qui traversent des ouvertures 33 ménagées dans l'armature 5 (figure 3).

Les nervures 19 situées aux bords de la peau 17 sont munies de rebords d'encliquetage 35 en saillie reçus dans des gorges complémentaires 37 ménagées dans les bords de l'armature 5.

Ainsi, grâce aux crochets 31 et aux rebords 35, le garnissage 7 est retenu par rapport à l'armature 5 et les nervures 19 sont maintenues appuyées contre l'armature 5. Le garnissage 7 est donc fixé sur l'armature 5.

Le garnissage 7 étant réalisé en une matière souple et des alvéoles 21 étant délimitées entre les nervures 19, le garnissage 7 peut se déformer au toucher.

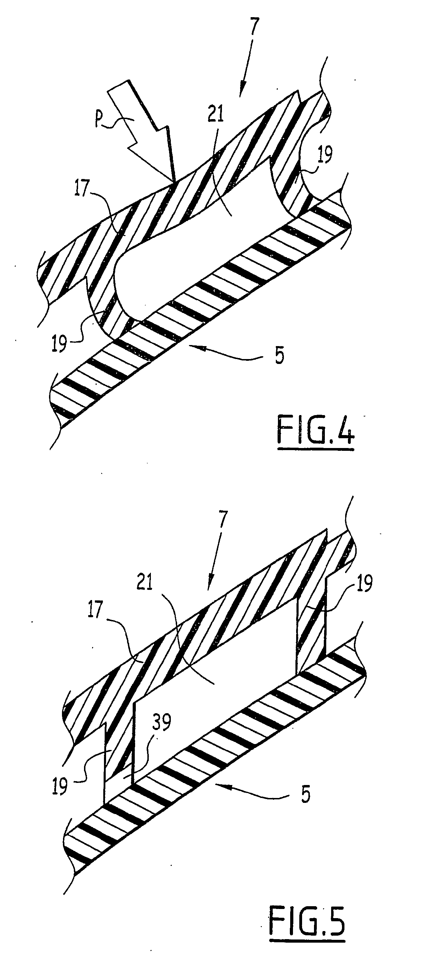

Comme illustré par la figure 4, cette déformation peut résulter d'un flambage des nervures 19 situées au voisinage du point d'application d'une force de poussée P et d'une flexion de la ou des régions de la peau 17 située(s) entre ces nervures. Plus généralement, cette déformation peut également résulter d'un pivotement par rapport à la peau 17 des nervures 19 qui ne sont pas orthogonales aux surfaces directives de l'armature 5 et de la peau 17, ou d'un ou plusieurs des trois phénomènes mentionnés précédemment.

Les nervures 19 et les alvéoles de déformation 21 confèrent ainsi sa souplesse et son épaisseur au garnissage 7 de sorte qu'un confort satisfaisant est obtenu.

En outre, ce confort ne nécessite pas d'utiliser une couche de mousse. Le coût de la planche de bord 1 est donc réduit car la réalisation du garnissage 7 est plus simple et nécessite moins de matière que si une couche de mousse était présente.

Ce coût est d'autant plus réduit du fait de l'utilisation d'une fixation par encliquetage. Toutefois, d'autres moyens que des moyens de fixation par encliquetage peuvent être utilisés.

Ainsi, le garnissage 7 peut être collé ou soudé sur l'armature de support 5.

Dans une telle variante illustrée par la figure 5, et afin d'éviter les problèmes de dilatation thermique de l'air présent dans les alvéoles 21 qui pourrait engendrer des déformations inesthétiques, les nervures 19 et 27 présentent des dégagements 39 permettant de mettre en communication les alvéoles 21 entre elles. Les nervures 19 situées au bord de la peau 17 présentent également des dégagements 39 pour mettre le réseau d'alvéoles 21 ainsi constitué en communication avec l'atmosphère de l'habitacle du véhicule. Ainsi, la différence de pression entre l'air contenu dans l'une quelconque des alvéoles 21 et l'atmosphère de l'habitacle est sensiblement nulle.

Plus généralement, la structure sans mousse de la planche de bord 1 permet d'y intégrer facilement des organes de commande tels que le bouton poussoir 16.

La planche de bord 1 s'avère également plus facilement recyclable du fait que la désolidarisation du garnissage 7 de l'armature de support 5 peut être bien plus facile et complète que dans le cas d'un garnissage moussé.

On notera que les nervures 19 et 27 peuvent être remplacées par des picots délimitant entre eux des espaces de déformation du garnissage 7.

On notera également que l'utilisation d'une matière translucide ou transparente pour former le garnissage 7 permet de conférer à la planche de bord un aspect esthétique original, par exemple écaillé ou en mosaïque, et ce à coût réduit. Toutefois, dans d'autres variantes, la matière utilisée est opaque.

On comprend aisément que la souplesse d'un garnissage 7 selon la présente invention pourra être adaptée aux besoins en jouant sur une combinaison de paramètres dudit garnissage 7 comprenant principalement, la hauteur et l'épaisseur des nervures 19, les propriétés mécanique de la matière constitutive du garnissage 7 et la taille moyenne des alvéoles 21.

De manière plus générale, les principes décrits ci-dessus peuvent s'appliquer à la réalisation de pièces d'équipement autres que des planches de bord, par exemple des panneaux de portes.

## Revendications

1. Pièce d'équipement (1) pour véhicule automobile, du type comprenant une armature rigide de support (5) et un garnissage souple (7) recouvrant la face extérieure (9) de l'armature de support, le garnissage comprenant une peau extérieure d'habillage (17) et étant déformable au toucher, **caractérisée en ce que** le garnissage comprend des saillies (19, 27) qui sont venues de matière avec la peau extérieure (17) et qui prennent appui sur la face extérieure (9) de l'armature de support (5), et **en ce que** les saillies (19, 27) délimitent entre elles des espaces (21) de déformation du garnissage pour lui conférer sa souplesse.

2. Pièce d'équipement selon la revendication 1, **caractérisée en ce que** l'armature de support (5) est galbée pour conférer à la pièce d'équipement (1) sa forme.

3. Pièce d'équipement selon l'une quelconque des revendications 1 ou 2, **caractérisée en ce qu'**elle comprend des moyens (31, 33, 35, 37) de fixation du garnissage (7) sur l'armature de support (5).

4. Pièce d'équipement selon la revendication 3, **caractérisée en ce que** les moyens de fixation comprennent des organes (31, 33, 35, 37) d'encliquetage.

5. Pièce d'équipement selon l'une des revendications précédentes, **caractérisée en ce qu'**un logement (15) de réception d'un organe mobile (17) est ménagé dans l'armature de support (5).

6. Pièce d'équipement selon la revendication 5, **caractérisée en ce qu'**un organe mobile (17) de commande d'un accessoire du véhicule automobile est reçu dans le logement (15).

7. Pièce d'équipement selon la revendication 6, **caractérisée en ce qu'**au moins une saillie (27) du garnissage (7) prend appui sur l'organe de commande (17), et **en ce que** ladite saillie (27) est séparée des saillies (19) du garnissage (7) qui prennent appui sur l'armature de support (5) autour du logement (15).

8. Pièce d'équipement selon l'une quelconque des revendications précédentes, **caractérisée en ce que** les saillies sont des nervures (19, 27) et **en ce que** les espaces de déformation sont des alvéoles (21) délimitées entre les nervures (19, 27).

9. Pièce d'équipement selon l'une des revendications précédentes, **caractérisée en ce qu'**elle comprend des moyens (39) de mise en communication des espaces (21) entre eux et/ou avec l'atmosphère extérieure.

10. Pièce d'équipement selon l'une des revendications précédentes, **caractérisée en ce qu'**elle constitue une planche de bord d'un véhicule automobile.

11. Véhicule automobile comprenant une pièce d'équipement (1), **caractérisée en ce que** la pièce d'équipement est une pièce selon l'une des revendications précédentes.

## Claims

1. Piece of equipment (1) for a motor vehicle, of the type comprising a rigid support framework (5) and a flexible covering (7) over the outer surface (9) of the support framework, the covering comprising an outer cladding skin (17) and being deformable to the touch, **characterised in that** the covering comprises projections (19, 27) which are integrally formed with the outer skin (17) and which bear on the outer surface (9) of the support framework (5), and **in that** the projections (19, 27) define between them deformation spaces (21) for the covering in order to give it its flexibility.

2. Piece of equipment according to claim 1, **characterised in that** the support framework (5) is curved in order to give the piece of equipment (1) its shape.

3. Piece of equipment according to any one of claims 1 or 2, **characterised in that** it comprises means (31, 33, 35, 37) for fixing the covering (7) to the support framework (5).

4. Piece of equipment according to claim 3, **characterised in that** the fixing means comprise latching members (31, 33, 35, 37).

5. Piece of equipment according to one of the preceding claims, **characterised in that** a recess (15) for housing a movable member (17) is formed in the support framework (5).

6. Piece of equipment according to claim 5, **characterised in that** a movable member (17) for controlling an accessory of the motor vehicle is accommodated in the recess (15).

7. Piece of equipment according to claim 6, **characterised in that** at least one projection (27) of the covering (7) bears on the control member (17), and **in that** said projection (27) is separate from the projections (19) of the covering which bear on the support framework (5) around the recess (15).

8. Piece of equipment according to any one of the preceding claims, **characterised in that** the projections are ribs (19, 27) and **in that** the deformation spaces are cells (21) defined between the ribs (19, 27).

9. Piece of equipment according to one of the preceding claims, **characterised in that** it comprises means (39) for the spaces (21) to communicate between themselves and/or with the outer atmosphere.

10. Piece of equipment according to one of the preceding claims, **characterised in that** it forms a dashboard of a motor vehicle.

11. Motor vehicle comprising a piece of equipment (1), **characterised in that** the fitting component is a component according to one of the preceding claims.

## Patentansprüche

1. Ausrüstungsteil (1) für Kraftfahrzeug, umfassend einen starren Tragrahmen (5) und eine flexible Garnitur (7), die die Außenseite (9) des Tragrahmens bedeckt, wobei die Garnitur eine Verkleidungsaußenhaut (17) umfasst und durch Berühren verformbar ist, **dadurch gekennzeichnet, dass** die Garnitur Vorsprünge (19, 27) umfasst, die mit der Außenhaut (17) aus einem Material bestehen und die auf der Außenseite (9) des Tragrahmens (5) aufliegen, und dass die Vorsprünge (19, 27) zwischen sich Räume (21) zur Verformung der Garnitur begrenzen, um ihr ihre Flexibilität zu verleihen.

2. Ausrüstungsteil nach Anspruch 1, **dadurch gekennzeichnet, dass** der Tragrahmen (5) gewölbt ist, um dem Ausrüstungsteil (1) seine Form zu verleihen.

3. Ausrüstungsteil nach einem der Ansprüche 1 oder 2, **dadurch gekennzeichnet, dass** es Mittel (31, 33, 35, 37) zur Befestigung der Garnitur (7) an dem Tragrahmen (5) umfasst.

4. Ausrüstungsteil nach Anspruch 3, **dadurch gekennzeichnet, dass** die Befestigungsmittel Einklinkorgane (31, 33, 35, 37) umfassen.

5. Ausrüstungsteil nach einem der vorhergehenden Ansprüche, **dadurch gekennzeichnet, dass** in dem Tragrahmen (5) eine Aussparung (15) zur Aufnahme eines beweglichen Organs (17) vorgesehen ist.

6. Ausrüstungsteil nach Anspruch 5, **dadurch gekennzeichnet, dass** in der Aussparung (15) ein bewegliches Organ (17) zur Steuerung eines Zubehörteils des Kraftfahrzeugs aufgenommen ist.

7. Ausrüstungsteil nach Anspruch 6, **dadurch gekennzeichnet, dass** mindestens ein Vorsprung (27) der Garnitur (7) auf dem Steuerorgan (17) aufliegt und dass dieser Vorsprung (27) von den Vorsprüngen (19) der Garnitur (7) getrennt ist, die um die Aussparung (15) herum auf dem Tragrahmen (5) aufliegen.

8. Ausrüstungsteil nach einem der vorhergehenden Ansprüche, **dadurch gekennzeichnet, dass** die Vorsprünge Rippen (19, 27) sind und dass die Verformungsräume zwischen den Rippen (19, 27) abgegrenzte Zellen (21) sind.

9. Ausrüstungsteil nach einem der vorhergehenden Ansprüche, **dadurch gekennzeichnet, dass** es Mittel (39) zum Verbinden der Räume (21) miteinander und/oder mit der äußeren Atmosphäre umfasst.

10. Ausrüstungsteil nach einem der vorhergehenden Ansprüche, **dadurch gekennzeichnet, dass** es aus einem Armaturenbrett eines Kraftfahrzeugs besteht.

11. Kraftfahrzeug, umfassend ein Ausrüstungsteil (1), **dadurch gekennzeichnet, dass** das Ausrüstungsteil ein Teil nach einem der vorhergehenden Ansprüche ist.
